# EUROPEAN PATENT APPLICATION

(11) **EP 4 749 728 A1**
(43) Date of publication of application: **27.05.2026**
(21) Application number: 24843196.7
(22) Date of filing: 19.07.2024
(51) Int. Cl.: H01M 8/1041, C08K 3/01, C08K 3/017, C08L 101/00, C25B 1/042, C25B 9/00, C25B 9/19, C25B 13/04, C25B 13/08, H01B 1/06, H01B 13/00, H01M 8/10

(54) **PROTON CONDUCTOR, METHOD FOR PRODUCING SAME, AND ELECTROCHEMICAL CELL**

(30) Priority: 20.07.2023 JP 2023118379
(71) Applicant: Mitsui Kinzoku Company, Limited, Tokyo 141-8584 (JP)
(72) Inventor: UEHARA, Hiromitsu, Ageo-shi, Saitama 362-0021 (JP); ANDO, Koki, Ageo-shi, Saitama 362-0021 (JP); IDE, Shingo, Ageo-shi, Saitama 362-0021 (JP)
(74) Representative: Novagraaf Technologies
(86) International application number: PCT/JP2024/025870
(87) International publication number: WO 2025/018408

(57) **Abstract**

Disclosed is a proton conductor including: a proton-conductive metal organic framework; a resin; and a dispersant. The metal organic framework includes a metal ion and a bridging ligand that coordinates to the metal ion. The metal organic framework contains a proton-conductive molecule or ion. Preferably, the dispersant is a high-molecular-weight dispersant including a resin-affinity unit and a polar unit that has a polar group. Preferably, the dispersant includes a high-molecular-weight dispersant having a comb structure and/or a block polymer structure.

## Description

### Technical Field

The present invention relates to a proton conductor and a method for producing the same. The present invention also relates to an electrochemical cell.

### Background Art

Conventionally, electrochemical cells such as polymer electrolyte fuel cells and water electrolysis devices have been known. In recent years, as an effort to prevent global warming by reducing CO₂, electrochemical cells with higher energy efficiency have been attracting attention. One method for improving the energy efficiency of electrochemical cells is to improve the proton-conducting properties of proton conductors used as electrolyte films. In particular, from the viewpoint of being applicable to chemical reactions requiring higher temperature conditions, there are demands for proton conductors having high proton conductivity at high temperatures of 100°C or higher. However, sulfonated tetrafluoroethylene, which is widely used in this field, has a problem that the proton conduction path shrinks at high temperatures of 100°C or higher, and the electroconductivity is significantly reduced.

Various attempts have been proposed heretofore to improve the proton-conducting properties of proton conductors at high temperatures of 100°C or higher. For example, Patent Literature 1 describes a coordination polymer containing metal ions, oxoanions, and proton-coordinating molecules. According to this document, the coordination polymer has high ionic conductivity even at high temperatures.

Patent Literature 2 describes a conductive film that includes a proton conductor including metal ions, oxoanions, and proton-coordinating molecules, and a resin filler including an engineering plastic. According to this document, the conductive film has high ionic conductivity even at high temperatures.

Patent Literature 3 describes a proton conductor made of phosphoric acid and a coordination polymer Cr-MIL-101 containing chromium ions. According to this document, the proton conductor has excellent ionic conductivity and structural stability even at high temperatures.

### Citation List

### Patent Literature

Patent Literature 1: US 2014/0011103 A1
Patent Literature 2: JP 2016-004621 A
Patent Literature 3: US 2019/0386327 A1

### Summary of Invention

As described above, although various proton conductors have been proposed heretofore, none of the proton conductors have sufficient proton-conducting properties at high temperatures, and there is still room for improvement in application to reactions requiring reaction temperatures of 100°C or higher.

Therefore, an objective of the present invention is to provide a proton conductor having high proton conductivity at high temperatures of 100°C or higher.

The present invention provides a proton conductor comprising:
a proton-conductive metal organic framework;
a resin; and
a dispersant, wherein:

the metal organic framework includes:
   a metal ion and
   a bridging ligand that coordinates to the metal ion; and
the metal organic framework contains a proton-conductive molecule or a proton-conductive ion.

The present invention also provides a method for producing a proton conductor, comprising:
casting a liquid mixture including a resin, a proton-conductive metal organic framework, a dispersant, and a solvent, to form a wet film; and
removing the solvent from the wet film, wherein:

the metal organic framework includes
   a metal ion and
   a bridging ligand that coordinates to the metal ion; and
the metal organic framework contains a proton-conductive molecule or a proton-conductive ion.

### Description of Embodiments

The present invention will be described below based on preferred embodiments thereof. A proton conductor of the present invention includes a metal organic framework (hereinafter also referred to as "MOF"), a resin, and a dispersant. The MOF is a metal complex including a metal ion and a bridging ligand that coordinates to the metal ion, and has proton-conducting properties. The resin is used to improve the heat resistance of the MOF. Details of the MOF and the resin will be described later.

In the proton conductor of the present invention, it is preferable that the MOF and the dispersant are dispersed in a matrix made from the resin. When the proton conductor has such a form, the effects of the resin and the dispersant described below can be made more pronounced.

First, the dispersant included in the proton conductor of the present invention will be described. As a result of the Inventors' research, it was found that proton conductors consisting only of MOF and resin still have room for improvement in terms of proton-conducting properties, especially at high temperatures of 100°C or higher; however, by further adding a dispersant to the proton conductor, the proton-conducting properties of the proton conductor at high temperatures can be improved. The reason for this is not clear, but the Inventors speculate as follows. In general, in a proton conductor, it is necessary for particles of proton-conductive MOF (hereinafter simply referred to as "MOF particles") to be connected to each other in order to exhibit proton-conducting properties. However, in a proton conductor that does not contain a dispersant, the dispersibility of the MOF particles dispersed in the resin is insufficient, causing positional bias in the MOF particles. Therefore, there are parts where the MOF particles are poorly connected to each other, thereby impairing proton-conducting properties. On the other hand, since the proton conductor of the present invention contains a dispersant, the dispersibility of the MOF particles is improved, and the MOF particles are distributed more uniformly within the proton conductor. This increases the connectivity between the MOF particles and improves the proton-conducting properties of the proton conductor.

The dispersant is not particularly limited, and any known dispersant can be used as long as the effects of the present invention are achieved. In particular, from the viewpoint of handleability in preferred methods for producing the proton conductor of the present invention described further below, the dispersant is preferably a liquid at room temperature (25°C). However, in cases where the dispersant is to be dissolved in a solvent described later, the dispersant may be a solid at room temperature. From the viewpoint of more reliably obtaining the aforementioned effects in the temperature range in which the proton conductor is used, the dispersant is preferably a liquid within a range from 0°C to 400°C, more preferably from 20°C to 300°C, even more preferably from 100°C to 250°C, under normal pressure (1 atm). In addition, it is preferable that the dispersant does not substantially decompose in the above temperature range.

Preferred examples of the dispersant may include low-molecular-weight dispersants (surfactants) and high-molecular-weight dispersants.

The surfactant may be, for example, anionic, cationic, amphoteric or nonionic. For the high-molecular-weight dispersant, it is possible to use a dispersant having a weight average molecular weight of preferably from 500 to 100,000, more preferably from 700 to 80,000, even more preferably from 900 to 65,000.

In particular, from the viewpoint of suppressing inhibition of the expression of proton-conducting properties of the MOF due to complete coverage of the surface of the MOF or complete blocking of the pores in the MOF, it is preferable that the dispersant has a high molecular weight, i.e., the dispersant is a high-molecular-weight dispersant.

The dispersant preferably includes a resin-affinity unit and a polar unit having a polar group. By using such a dispersant, the MOF particles are bonded to the polar unit on the one hand, while on the other hand, the resin-affinity unit enhances the dispersibility of the MOF particles bonded to the dispersant, so that the dispersibility of the MOF particles can be effectively enhanced.

The resin-affinity unit is a structure that enhances the affinity with the resin. In order to enhance the affinity with the resin, it is preferable that the resin-affinity unit has hydrophobicity. Examples of the resin-affinity unit may include polyalkylene glycol structures such as polyethylene glycol structures, polypropylene glycol structures and polybutylene glycol structures, as well as polyurethane structures, polyester structures, unsaturated polyamide structures, phosphoric ester structures, polycarboxylic acid structures and salts thereof, polyalkylamine structures and salts thereof, polycarboxylic acid ester structures, hydroxyl group-containing polycarboxylic acid ester structures, polysiloxane structures, and modified polyacrylate structures.

From the viewpoint of increasing the bonding strength with the MOF particles, the polar unit preferably has one or more polar groups selected from the group consisting of a carboxy group, an amino group, a sulfo group, an ester group, an ether group, a ketone group, and a hydroxyl group. The polar group may be ionized. For example, the polar group may be a carboxylate formed by ionizing a carboxy group.

Further, the dispersant preferably has a comb structure and/or a block polymer structure. The "comb structure" refers to a structure including a main chain and molecular chains arranged in a comb shape with respect to the main chain. An example of the comb structure may include a structure including: a main chain including a polar unit; and resin-affinity units arranged in a comb shape with respect to the main chain.

An example of a dispersant having a block polymer structure may include a structure in which a structure containing a polar unit and a structure containing a resin-affinity unit are arranged in separate blocks.

Specific examples of dispersants that are preferably used in the present invention may include high-molecular-weight polycarboxylic acid dispersants, high-molecular-weight amine dispersants, and high-molecular-weight polyester dispersants.

Commercially available dispersants can also be used. Examples of such dispersants may include MALIALIM FA-1150AM-08 (manufactured by NOF Corporation), MALIALIM AKM-0531 (manufactured by NOF Corporation), ESLEAM AD-3172M (manufactured by NOF Corporation), ESLEAM C-2095I (manufactured by NOF Corporation), ESLEAM C-2093I (manufactured by NOF Corporation), ESLEAM 221P (manufactured by NOF Corporation), Hinoact T-9100 (manufactured by Kawaken Fine Chemicals Co., Ltd.), Hinoact KF-1300M (manufactured by Kawaken Fine Chemicals Co., Ltd.), AJISPER PN411 (manufactured by Ajinomoto Fine-Techno Co., Inc.), and AJISPER PN111 (manufactured by Ajinomoto Fine-Techno Co., Inc.).

The dispersant may or may not have proton-conducting properties.

In the proton conductor of the present invention, the content of the dispersant is preferably from 0.3 to 40 mass%, more preferably from 0.5 to 30 mass%, even more preferably from 0.6 to 20 mass%, particularly preferably from 0.8 to 20 mass%. By setting the dispersant content to 0.3 mass% or more, the effect of the dispersant in improving the proton-conducting properties of the proton conductor can be more reliably obtained. Furthermore, by setting the dispersant content to 40 mass% or less, the content of the proton-conductive MOF can be sufficiently ensured, thereby improving the proton-conducting properties of the proton conductor.

From the same viewpoint, the mass ratio of the dispersant to the MOF contained in the proton conductor (dispersant/MOF) is preferably from 0.020 to 1.0, more preferably from 0.040 to 0.50, even more preferably from 0.070 to 0.30, particularly preferably from 0.070 to 0.20.

Next, the MOF contained in the proton conductor of the present invention will be described. As described above, the MOF is a metal complex including a metal ion and a bridging ligand that coordinates to the metal ion. As long as the MOF has proton-conducting properties, any MOF commonly used in this field can be used without particular limitation.

In this specification, a MOF "has proton-conducting properties (i.e., is proton-conductive)" means that the MOF conducts protons or oxonium ions when a potential gradient is applied to the MOF.

The metal ion contained in the MOF is not particularly limited, but is preferably at least one selected from the group consisting of zinc ions, chromium ions, aluminum ions, magnesium ions, manganese ions, iron ions, cobalt ions, nickel ions, copper ions, yttrium ions, and zirconium ions, and more preferably, at least one selected from the group consisting of zinc ions, chromium ions, aluminum ions, iron ions, cobalt ions, nickel ions, copper ions, and zirconium ions. By using such a metal ion, an MOF with excellent stability at high temperatures of 100°C or higher can be obtained.

The bridging ligand contained in the MOF is not particularly limited, but from the viewpoint of further enhancing the chemical stability of the MOF, it is preferable that the bridging ligand includes a multidentate ligand having two or more coordination sites capable of coordinating to the metal ion.

As the bridging ligand, it is possible to preferably use, for example, at least one selected from the group consisting of phosphoric acid, polycarboxylic acids, amino acids, polyamines, nitrogen-containing heteroaromatic compounds, anions thereof, and oxide ion (O²⁻).

The aforementioned "anions thereof" refer to anions produced by deprotonating the acidic functional group in the bridging ligands exemplified above; in cases where a plurality of acidic protons are present in the ligand, "anions thereof" encompass anions produced by deprotonating only some of those protons, and anions produced by deprotonating all of those protons. For example, "anions of phosphoric acid" may refer to a phosphate ion, a hydrogen phosphate ion, and a dihydrogen phosphate ion.

The polycarboxylic acid refers to a compound having two or more carboxy groups, and examples thereof may include dicarboxylic acids, tricarboxylic acids, and tetracarboxylic acids.

Examples of dicarboxylic acids may include oxalic acid, butanedioic acid, (E)-butenedioic acid, benzene-1,4-dicarboxylic acid, benzene-1,3-dicarboxylic acid, 2-bromo-1,4-benzenedicarboxylic acid, biphenyl-4,4'-dicarboxylic acid, 2,5-dihydroxy-1,4-benzenedicarboxylic acid, (2E,4E)-hexa-2,4-dienedioic acid, 1,4-naphthalenedicarboxylic acid, 2,5-naphthalenedicarboxylic acid, 1,4-anthracenedicarboxylic acid, 9,10-anthracenedicarboxylic acid, pyrene-2,7-dicarboxylic acid, 4,5,9,10-tetrahydropyrene-2,7-dicarboxylic acid, and 1H-pyrazole-3,5-dicarboxylic acid.

Examples of tricarboxylic acids may include benzene-1,3,5-tricarboxylic acid, biphenyl-3,4',5-tricarboxylic acid, and 1,3,5-tris(4-carboxyphenyl)benzene.

An example of a tetracarboxylic acid may include biphenyl-3,3',5,5'-tetracarboxylic acid.

The amino acid is a compound including at least one amino group and at least one carboxy group in the molecule. In the specification of the present application, the term "amino group" refers to a primary amino group (-NH₂), a secondary amino group (-NHR¹), and a tertiary amino group (-NR¹R²).

Examples of amino acids may include 2-amino-1,4-benzenedicarboxylic acid, aspartic acid, and glutamic acid.

The polyamine refers to a compound having two or more amino groups, and examples thereof may include diamines, triamines, and tetraamines.

Examples of diamines may include piperazine and 1,4-diazabicyclo[2.2.2]octane.

Examples of triamines may include biphenyl-3,4',5-triamine and 1,3,5-tris(4-aminophenyl)benzene.

An example of a tetracarboxylic acid may include biphenyl-3,3',5,5'-tetraamine.

The nitrogen-containing heteroaromatic compound is a compound having at least one nitrogen atom on its heteroaromatic ring, and the nitrogen atom can coordinate to a metal ion via its lone pair. As the nitrogen-containing heteroaromatic compound, it is possible to use: (i) a compound having two or more nitrogen atoms on a heteroaromatic ring; or (ii) a compound having one or more nitrogen atoms on a heteroaromatic ring and having one or more functional groups capable of coordinating to a metal ion, such as a carboxy group and an amino group. In addition, the two or more nitrogen atoms included in the compound (i) may be present on one heteroaromatic ring, or may be present separately on two or more different heteroaromatic rings.

Examples of the compound (i) may include adenine, 4,4'-bipyridine, pyrimidine, pyrazine, 1,2,4-triazole, 1,3,5-triazine, imidazole, 5,6-dimethylbenzimidazole, 1H-benzimidazole, and 2-methyl-1H-imidazole.

Examples of the compound (ii) may include pyridine-4-carboxylic acid and pyridine-3-carboxylic acid.

The bridging ligand is not limited to the above examples. For example, the bridging ligand may be a derivative of the above examples of the compounds. In the specification of the present application, "derivative" means a compound in which a part of the chemical structure is substituted by another atom or atomic group, such as a compound in which one or more hydrogen atoms in the chemical structure are substituted by a hydrocarbon group having 1 to 4 carbon atoms. Specific examples of derivatives may include 2-methylimidazole, 2-ethylimidazole, histamine, and histidine in relation to imidazole.

The MOF may include a non-bridging ligand. The non-bridging ligand refers to a ligand that coordinates to only one metal ion in the MOF. The MOF may also include components other than the metal ion and the ligand, such as an uncoordinated counterion. The uncoordinated counterion refers to a counterion that does not form a direct coordinate bond with the metal ion.

From the viewpoint of improving the proton-conducting properties of the MOF, in cases where the MOF includes a non-bridging ligand, it is preferable to use a proton-conductive molecule or a proton-conductive ion as described below as the non-bridging ligand. From the similar viewpoint, in cases where the MOF includes an uncoordinated counterion, it is preferable to use a proton-conductive ion as described below as the uncoordinated counterion.

The MOF preferably contains a proton-conductive molecule or a proton-conductive ion. In the specification of the present application, "proton-conductive molecules or ions" refer to molecules or ions capable of conducting protons or oxonium ions when a potential gradient is applied thereto.

The phrase "MOF contains a proton-conductive molecule or a proton-conductive ion" may refer to any of the following embodiments.
(1) At least one of the bridging ligands, non-bridging ligands, and uncoordinated counterions constituting the MOF is a proton-conductive molecule or a proton-conductive ion.
(2) The MOF forms pores, and the pores are filled with proton-conductive molecules or proton-conductive ions.

In the aforementioned embodiment (2), the MOF before being filled with the proton-conductive molecules or ions does not necessarily have to have proton-conducting properties. In addition, in the aforementioned embodiment (2), the proton-conductive molecules or ions may be present so as to fill all of the pores of the MOF, or may be present only in some of the pores of the MOF, so long as the MOF has proton-conducting properties.

In the specification of the present application, depending on the context, the term "MOF" may refer to a metal complex whose pores are filled with proton-conductive molecules or ions, or may refer to a metal complex before the pores are filled with proton-conductive molecules or ions.

The MOF of the present invention can include one or two or more of proton-conductive molecules or ions.

Examples of proton-conductive molecules may include those exemplified above as bridging ligands (excluding those in which all coordination sites are occupied by metal ions), as well as amines such as primary amines, secondary amines, and tertiary amines.

Examples of primary amines may include alkylamines such as methylamine, ethylamine, and propylamine; and aromatic primary amines such as aniline and toluidine.

Examples of secondary amines may include dialkylamines such as dimethylamine, diethylamine, dipropylamine, pyrrolidine, piperidine, and morpholine; and aromatic secondary amines such as N-methylaniline and N-methyltoluidine.

Examples of tertiary amines may include trialkylamines such as trimethylamine, triethylamine, 1-alkylpyrrolidines (e.g., 1-methylpyrrolidine), 1-alkylpiperidines (e.g., 1-methylpiperidine), and 4-alkylmorpholines (e.g., 4-methylmorpholine); and aromatic tertiary amines such as N,N-dimethylaniline and N,N-dimethyltoluidine.

Examples of proton-conductive ions may include proton-conductive cations and proton-conductive anions.

Examples of proton-conductive cations may include the protonated forms of the various amines and nitrogen-containing heteroaromatic compounds exemplified above; and quaternary ammonium salts such as tetraalkylammonium salts.

Examples of proton-conductive anions may include the anions of the compounds exemplified above as the bridging ligands (excluding those in which all coordination sites are occupied by metal ions), as well as sulfate ions, hydrogen sulfate ions, and the like. Among these, phosphate ions, hydrogen phosphate ions, and dihydrogen phosphate ions are preferred because of their high chemical stability against protons.

As the proton-conductive molecules or ions, derivatives thereof can also be used.

Regardless of the type of molecule or ion used as the proton-conductive molecule or the proton-conductive ion, the number of carbon atoms therein is preferably from 0 to 30, more preferably from 0 to 25, even more preferably from 0 to 20.

Examples of particularly preferable proton-conductive molecules or ions from the viewpoint of proton-conducting properties may include at least one selected from the group consisting of phosphate ion, hydrogen phosphate ion, dihydrogen phosphate ion, imidazole, imidazolium ion, benzimidazole, benzimidazolium ion, pyridine, pyridinium ion, trialkylamines, tetraalkylammonium salts, sulfate ion, hydrogen sulfate ion, and derivatives thereof.

In the case of the aforementioned embodiment (1), from the viewpoint of obtaining sufficient proton-conducting properties, the total content of the proton-conductive molecules or ions (bridging ligands, non-bridging ligands, or uncoordinated counterions), per mole of metal ions, is preferably 2 moles or more, more preferably 4 moles or more, even more preferably 5 moles or more. Further, from the viewpoint of facilitating the synthesis of the MOF, it is practical to set the content of the proton-conductive molecules or ions to, for example, 10 moles or less per mole of metal ions.

Similarly, in the case of the aforementioned embodiment (2), from the viewpoint of obtaining sufficient proton-conducting properties, the content of the proton-conductive molecules or ions in the MOF containing the proton-conductive molecules or ions is preferably 10 mass% or more, more preferably 15 mass% or more, even more preferably 20 mass% or more. Further, taking into consideration the pore volume of the MOF, it is practical to set the content of the proton-conductive molecules or ions to 50 mass% or less with respect to the MOF containing the proton-conductive molecules or ions.

The content of the MOF in the proton conductor is preferably from 10 to 80 mass%, more preferably from 20 to 70 mass%, even more preferably from 30 to 60 mass%.

By setting the content of MOF to 10 mass% or more, the content of proton-conductive MOF can be sufficiently ensured, and therefore, the effect of being able to improve the proton-conducting properties of the proton conductor can be obtained.

Furthermore, by setting the content of MOF to 80 mass% or less, the effect of being able to sufficiently increase the heat resistance of the proton conductor can be obtained. In the aforementioned embodiment (2), the mass of the MOF used in calculating the "content of MOF" includes the mass of the proton-conductive molecules or ions filled in the pores of the MOF.

Next, the resin contained in the proton conductor of the present invention will be described. The resin has the effect of improving the heat resistance of the MOF that constitutes the proton conductor. There are no particular limitations on the resin that can be used in the present invention, but from the viewpoint of more reliably obtaining the aforementioned effects, it is preferable that the resin does not substantially decompose at temperatures of preferably 250°C or less, more preferably 350°C or less, even more preferably 500°C or less.

In light of the above, preferred examples of resins may include at least one selected from the group consisting of polyamide-imide, polysulfone, polyphenylsulfone, polyvinylidene fluoride, polyimide, polyvinyl butyral, and cellulose ester.

The content of the resin in the proton conductor is preferably from 15 to 85 mass%, more preferably from 20 to 75 mass%, even more preferably from 30 to 65 mass%.

By setting the resin content to 15 mass% or more, the heat resistance of the proton conductor can be sufficiently increased. Further, by setting the resin content to 85 mass% or less, the content of the proton-conductive MOF can be sufficiently ensured, thereby improving the proton-conducting properties of the proton conductor.

Similarly, from the viewpoint of improving the heat resistance and proton-conducting properties of the proton conductor in a balanced manner, the mass ratio of the MOF to the resin in the proton conductor (MOF/resin) is preferably from 0.40 to 3.0, more preferably from 0.50 to 2.0, even more preferably from 0.60 to 1.5.

The proton conductor may contain components other than the MOF, the resin, and the dispersant, as long as the effects of the present invention are not impaired.

There are no particular limitations on the shape of the proton conductor, but when it is used, for example, as an electrolyte film in an electrochemical cell, it is advantageous for it to have a film shape. In this case, the film thickness of the proton conductor is preferably from 10 to 500 µm, more preferably from 20 to 300 µm, even more preferably from 40 to 200 µm. By setting the film thickness of the proton conductor within this range, it is possible to obtain the effect of keeping resistance low while ensuring flexibility.

The proton conductor of the present invention can be used as an electrochemical cell by being disposed between an anode and a cathode. Since the proton conductor of the present invention has high proton conductivity at high temperatures, such an electrochemical cell can be suitably used particularly for electrochemical reactions that require high temperatures.

Next, a preferred method for producing the proton conductor of the present invention will be described. This method involves the following steps.
(A) A step of preparing a proton-conductive MOF.
(B) A step of preparing a liquid mixture containing a resin, the proton-conductive MOF, a dispersant, and a solvent.
(C) A step of casting the liquid mixture to form a wet film, and removing the solvent from the wet film.

### Step A:

The MOF may be, for example, one synthesized by a known method or a commercially available product. When the MOF takes the form of the aforementioned embodiment (2), a step of filling the pores of the MOF with proton-conductive molecules or ions is carried out after preparing the MOF before filling with the proton-conductive molecules or ions.

The filling can be carried out by either a dry method or a wet method. When filling by a dry method, for example, the MOF and the proton-conductive molecules or ions may be mixed in a mortar. Alternatively, the MOF and the proton-conductive molecules or ions may be mixed using a ball mill, a planetary stirrer, a mortar machine, or the like. The filling can also be carried out by introducing vapor of the proton-conductive molecules or ions into a container containing the MOF at high temperature.

From the viewpoint of ease of operation, the filling is preferably carried out by a dry method, particularly by mixing in a mortar.

In either case of the filling method, the filling may be carried out in an air atmosphere or in an inert gas atmosphere.

### Step B:

In Step B, there is no limitation on the order in which the resin, the MOF, the dispersant, and the solvent are to be mixed. For example, the MOF and the resin may be mixed, and then the solvent and the dispersant may be added successively to prepare a liquid mixture. Alternatively, the resin and the solvent may be mixed in advance, and then the MOF and the dispersant may be added successively to prepare a liquid mixture. Three or more components may also be mixed simultaneously.

The solvent used to prepare the liquid mixture may be selected as appropriate taking into consideration the solubility of the resin in the solvent, but from the viewpoint of the solubility of the resin, aprotic polar solvents may preferably be used. Examples of aprotic polar solvents may include N,N-dimethylformamide (DMF), N,N-dimethylacetamide (DMAc), N-methyl-2-pyrrolidone (NMP), acetone, cyclopentanone, etc. These solvents may be used alone or in combination of two or more.

There are no particular limitations on the amount of solvent contained, but by appropriately adjusting the content of the solvent, it is possible to obtain the effects of increasing the fluidity of the liquid mixture and thereby improving its moldability, and increasing the viscosity of the liquid mixture and thereby making it easier to control the film thickness of the proton conductor.

The resulting liquid mixture may be degassed under reduced pressure as necessary. In this case, the pressure for the degassing treatment is preferably from 0.2 to 80 kPa, more preferably from 5 to 30 kPa.

The degassing treatment can be carried out, for example, at room temperature.

The time for the degassing treatment is preferably from 15 minutes to 2 hours, more preferably from 30 minutes to 1 hour.

### Step C:

After the liquid mixture is obtained, the liquid mixture is then cast onto a substrate to form a wet film. As the substrate, it is possible to use, for example, a glass plate, a metal plate, a resin plate, a resin sheet, etc. There is no particular limitation on the method of casting the liquid mixture, and for example, by using an applicator, a wet film having a uniform thickness can be easily obtained. Alternatively, the liquid mixture can be dropped onto the substrate to obtain a wet film.

The wet film is then dried to remove the solvent from the wet film, thereby obtaining a proton conductor. Drying can be performed under atmospheric pressure or under reduced pressure.

Drying is preferably performed at a temperature equal to or lower than the decomposition temperature of the MOF and the resin, and if the MOF has a melting point, drying is preferably performed at a temperature equal to or lower than the melting point. More specifically, when drying is performed under atmospheric pressure, the drying temperature is preferably from 100°C to 200°C, more preferably from 120°C to 180°C, even more preferably from 130°C to 150°C. The drying time is preferably from 15 minutes to 24 hours, more preferably from 30 minutes to 12 hours, and even more preferably from 1 hour to 8 hours.

When drying is performed under atmospheric pressure, drying can be performed in an inert gas atmosphere or in air. There are no particular limitations on the heating means. For example, heating means such as blowing hot air, irradiating with infrared rays, and heating in a heating furnace can be used.

The film thickness of the proton conductor can be adjusted, for example, by the following method. When an applicator is used to cast the liquid mixture to form a wet film, the film thickness can be adjusted by appropriately selecting the applicator gap. When a wet film is obtained by dropping the liquid mixture onto a substrate, the film thickness can be adjusted by appropriately selecting the amount of the dropped solution per unit area.

The proton conductor thus obtained can be peeled off from the substrate, if necessary, and then used for various purposes.

The foregoing embodiments of the present invention encompass the following technical ideas.
[1] A proton conductor comprising:
   a proton-conductive metal organic framework;
   a resin; and
   a dispersant, wherein:

   the metal organic framework includes:
      a metal ion and
      a bridging ligand that coordinates to the metal ion; and
   the metal organic framework contains a proton-conductive molecule or a proton-conductive ion.
[2] The proton conductor as set forth in clause [1], wherein the dispersant is a high-molecular-weight dispersant including a resin-affinity unit and a polar unit that has a polar group.
[3] The proton conductor as set forth in clause [1] or [2], wherein the dispersant includes a high-molecular-weight dispersant having a comb structure and/or a block polymer structure.
[4] The proton conductor as set forth in any one of clauses [1] to [3], wherein the proton conductor contains from 1 to 40 parts by mass of the dispersant per 100 parts by mass of the metal organic framework.
[5] The proton conductor as set forth in any one of clauses [1] to [4], wherein the resin is at least one selected from the group consisting of polyamide-imide, polysulfone, polyphenylsulfone, polyvinylidene fluoride, polyimide, polyvinyl butyral, and cellulose ester.
[6] The proton conductor as set forth in any one of clauses [1] to [5], wherein the metal ion is at least one selected from the group consisting of zinc ions, chromium ions, aluminum ions, magnesium ions, manganese ions, iron ions, cobalt ions, nickel ions, copper ions, yttrium ions, and zirconium ions.
[7] The proton conductor as set forth in any one of clauses [1] to [6], wherein the proton-conductive molecule or the proton-conductive ion is at least one selected from the group consisting of phosphate ion, hydrogen phosphate ion, dihydrogen phosphate ion, imidazole, imidazolium ion, benzimidazole, benzimidazolium ion, pyridine, pyridinium ion, trialkylamines, tetraalkylammonium salts, sulfate ion, hydrogen sulfate ion, and derivatives thereof.
[8] The proton conductor as set forth in any one of clauses [1] to [7], wherein the bridging ligand is at least one selected from the group consisting of phosphoric acid, polycarboxylic acids, amino acids, polyamines, nitrogen-containing heteroaromatic compounds, anions thereof, and oxide ion.
[9] The proton conductor as set forth in any one of clauses [1] to [8], wherein the metal organic framework and the dispersant are dispersed in a matrix made of the resin.
[10] An electrochemical cell comprising
   an anode,
   a cathode, and
   a solid electrolyte film including the proton conductor according to any one of clauses [1] to [3] and disposed between the anode and the cathode.
[11] A method for producing a proton conductor, comprising:
   casting a liquid mixture including a resin, a proton-conductive metal organic framework, a dispersant, and a solvent, to form a wet film; and
   removing the solvent from the wet film, wherein:

   the metal organic framework includes
      a metal ion and
      a bridging ligand that coordinates to the metal ion; and
   the metal organic framework contains a proton-conductive molecule or a proton-conductive ion.

### Examples

The present invention will be described in more detail below with reference to examples. However, the scope of the present invention is not limited to such examples. Unless otherwise specified, "%" means "mass% (percent by mass)."

The synthesis of the MOFs used in the examples and comparative examples described below was carried out as follows.

### Synthesis of ZnPIm:

ZnPIm was synthesized as follows according to the method described in J. Am. Chem. Soc. 2012, 134, 7612-7615.

81 mg of zinc oxide, 136 mg of imidazole, 205 µL of 85% phosphoric acid, and 500 µL of ethanol were weighed out and mixed in a mortar for 15 minutes. The white powder was then collected, washed with ethanol, and dried overnight at 100°C to obtain ZnPlm.

ZnPIm is an MOF having a structure represented by the composition formula [Zn(HPO₄)(H₂PO₄)₂](ImH₂)₂. In the formula, ImH₂ represents an imidazolium ion. ZnPIm has a zinc ion as a metal ion, a hydrogen phosphate ion and a dihydrogen phosphate ion as bridging ligands, and an imidazolium ion as an uncoordinated counterion. The hydrogen phosphate ion, the dihydrogen phosphate ion, and the imidazolium ion are all proton-conductive ions.

### Synthesis of ZnP_dmBIm:

ZnP_dmBIm was synthesized as follows according to the method described in J. Mater. Chem. A, 2014, 2, 10404-10409.

81 mg of zinc oxide, 205 µL of 85% phosphoric acid, 292 mg of 5,6-dimethylbenzimidazole, and 500 µL of ethanol were weighed out and mixed in a mortar for 15 minutes. The brownish white powder was then collected, washed with ethanol, and dried overnight at 80°C.

ZnP_dmBIm is an MOF having a structure represented by the composition formula [Zn(HPO₄)(H₂PO₄)₂](H₂dmBIm)₂. In the formula, H₂dmBIm represents a 5,6-dimethylbenzimidazolium ion. ZnP_dmBIm has a zinc ion as a metal ion, a hydrogen phosphate ion and a dihydrogen phosphate ion as bridging ligands, and a 5,6-dimethylbenzimidazolium ion as an uncoordinated counterion. The hydrogen phosphate ion, the dihydrogen phosphate ion, and the 5,6-dimethylbenzimidazolium ion are all proton-conductive ions.

### Synthesis of MIL(20)·1:

MIL(20)·1 was synthesized as follows according to the method described in RSC Adv. 2017, 7, 403-407.

First, 15 mg of MIL-101(Cr) (manufactured by Atomis, Inc.) was dried under reduced pressure at 180°C for 6 hours, and then mixed with 85 mg of imidazole trifluoromethanesulfonate salt (manufactured by Sigma-Aldrich) in a mortar for 15 minutes in a nitrogen atmosphere.

MIL-101(Cr) is an MOF having a structure represented by the composition formula Cr₃O(C₈H₄O₄)₃F, and has a chromium ion as a metal ion, terephthalate (anion of benzene-1,4-dicarboxylic acid) and an oxide ion as bridging ligands, and a fluoride ion as a non-bridging ligand.

MIL(20)·1 is a compound in which the pores of MIL-101(Cr) are filled with imidazole trifluoromethanesulfonate salt, and the imidazolium ion is a proton-conductive ion. MIL(20)·1 contains 27 mass% of imidazolium ion.

### Synthesis of MIL(10)·1:

MIL(10)·1 was synthesized as follows according to the method described in RSC Adv. 2017, 7, 403-407.

First, 24 mg of MIL-101(Cr) (manufactured by Atomis, Inc.) was dried under reduced pressure at 180°C for 6 hours, and then mixed with 68 mg of imidazole trifluoromethanesulfonate salt (manufactured by Sigma-Aldrich) in a mortar for 15 minutes in a nitrogen atmosphere.

MIL(10)·1 is a compound in which the pores of MIL-101(Cr) are filled with imidazole trifluoromethanesulfonate salt, and the imidazolium ion is a proton-conductive ion. MIL(10)·1 contains 23 mass% of imidazolium ion.

### Synthesis of DMAS_ZnoxRe:

DMAS_ZnoxRe was synthesized as follows according to the method described in Angew. Chem. 2014, 126, 2676.

143 mg of zinc sulfate heptahydrate, 158 mg of oxalic acid, and 6 mL of dimethylformamide were weighed out and mixed, then charged into an autoclave and heated at 160°C for 4 days. After that, it was cooled to room temperature over 24 hours, and the resulting solid was filtered, washed with DMF, and dried in vacuum at 120°C.

DMAS_ZnoxRe is an MOF having a structure represented by the composition formula [(Me₂NH₂)₃(SO₄)]₂[Zn₂(OX)₃].

In the formula, Me represents a methyl group, and ox represents an oxalate ion. DMAS_ZnoxRe has a zinc ion as a metal ion, an oxalate ion as a bridging ligand, and a dimethylaminium ion and a sulfate ion as uncoordinated counterions. Both the dimethylaminium ion and the sulfate ion are proton-conductive ions.

### Resins and Dispersants:

The resins and dispersants used in the examples and comparative examples described below are as follows.

### Resins:

- Polyamide-imide (PAI 4000 TF manufactured by Solvey; hereinafter also referred to as "PAI")
- Polysulfone (PSU P-1700 NT11 manufactured by Solvey; hereinafter also referred to as "PSU")
- Polyvinyl butyral (Mowital B 75H manufactured by Kuraray Co., Ltd.; hereinafter also referred to as "PVB")
- Polyvinylidene fluoride (PVDF 6013/1001 manufactured by Solvey; hereinafter also referred to as "PVDF")
- Glass fiber reinforced polyamide-imide (Torlon 5030 polyamide-imide manufactured by Solvey; hereinafter also referred to as "5030")
- Cellulose ester (L-20 manufactured by Daicel Corporation; hereinafter also referred to as "L-20")

### Dispersants:

- MALIALIM FA-1150AM-08 (manufactured by NOF Corporation; high-molecular-weight polycarboxylic acid dispersant with a comb structure; aqueous solution containing 50% active ingredient)
- ESLEAM AD-3172M (manufactured by NOF Corporation; high-molecular-weight amine-based dispersant with a comb structure; 100% active ingredient)
- Hinoact T-9100 (manufactured by Kawaken Fine Chemicals Co., Ltd.; high-molecular-weight polyester dispersant with a comb structure; 100% active ingredient)
- AJISPER PN411 (manufactured by Ajinomoto Fine-Techno Co., Inc.; high-molecular-weight neutral dispersant; 100% active ingredient)
- ESLEAM 221P (manufactured by NOF Corporation; low-molecular-weight dispersant; 100% active ingredient)

### Example 1 (Production of Proton Conductor):

1.00 g each of ZnPIm and PAI were weighed out and mixed in a mortar. Next, 4.25 g of DMF and 0.20 g of MALIALIM FA-1150AM-08 (containing 0.10 g of active ingredient) were added dropwise in that order, and then mixed until a uniform paste was formed, to obtain a liquid mixture. The liquid mixture was transferred to a Teflon (registered trademark) beaker, placed in a vacuum desiccator whose pressure was reduced to 10 kPa, and degassed for 30 minutes.

Next, the degassed liquid mixture was dropped onto a glass plate and applied with an applicator, to form a wet film. At this time, the applicator gap was adjusted so that the film thickness of the proton conductor was as shown in Table 1. This wet film was dried at 140°C in air for 3 hours, to obtain a proton conductor.

### Examples 2 to 9 and Comparative Examples 1 to 9:

Proton conductors were obtained in the same manner as in Example 1, except that the type and mass of the MOF, the type and mass of the resin, the type and mass of the dispersant, the type and mass of the solvent, and the film thickness of the proton conductor were changed as shown in Tables 1 and 2. In all of the comparative examples, no dispersant was used.

### Examples 10 to 16 and Comparative Example 10:

ZnPIm was used as the MOF, PVDF was used as the resin, a mixed solvent of NMP/acetone (43:57, mass ratio) was used as the solvent, and the dispersants shown in Table 3 were used.

First, 0.50 g of PVDF and 9.92 g of the mixed solvent were mixed. Next, 0.33 g of ZnPIm and the amount of the dispersant shown in Table 3 were added thereto successively. This was mixed in a mortar, to obtain a liquid mixture. The liquid mixture was transferred to a Teflon (registered trademark) beaker, placed in a vacuum desiccator whose pressure was reduced to 10 kPa, and degassed for 1 hour.

Next, the degassed liquid mixture was dropped onto a glass plate, to form a wet film. At this time, the amount of the liquid mixture dropped per unit area was adjusted so that the film thickness of the proton conductor was as shown in Table 3. This wet film was dried at 140°C in air for 3 hours, to obtain a proton conductor. In Comparative Example 10, no dispersant was used.

### Examples 17 to 22 and Comparative Example 11:

DMAS_ZnoxRe was used as the MOF. The mass of the MOF, the type and mass of the resin, the type and mass of the solvent, the type and mass of the dispersant, and the film thickness of the proton conductor were changed as shown in Table 4. Except for the above points, proton conductors were obtained in the same manner as in Example 1. In Example 21, a mixed dispersant of ESLEAM 221P/AJISPER PN411 (50:50, mass ratio) was used as the dispersant. In Comparative Example 11, no dispersant was used.

### Example 23:

DMAS_ZnoxRe was used as the MOF. The mass of the MOF, the type and mass of the resin, the type and mass of the solvent, the type and mass of the dispersant, and the film thickness of the proton conductor were changed as shown in Table 4. Except for the above points, a proton conductor was obtained in the same manner as in Examples 10 to 16 and Comparative Example 10. A mixed solvent of NMP/acetone (43:57, mass ratio) was used as the solvent.

### Evaluation:

The proton conductors obtained in the respective Examples and Comparative Examples were evaluated as follows.

### Measurement of Film Thickness of Proton Conductor:

The film thickness of the proton conductor was measured using a digital length measuring device (DIGIMICRO STAND MS-1C manufactured by Nikon Corporation). The average value of the thicknesses at five points was taken as the film thickness of the proton conductor.

### Measurement of Proton Conductivity:

A test piece was cut out from the proton conductor into a circular shape with a diameter of 10 mm, and platinum paste (TR-7905, manufactured by Tanaka Precious Metal Technologies Co., Ltd.) was applied to both sides to 3 mm × 3 mm, and dried at 140°C for 1 hour, to form electrodes on both sides of the test piece. Next, an AC voltage of 100 mV was applied between both electrodes under a nitrogen gas flow (200 mL/min), and complex impedance analysis was performed in the frequency range of 10 Hz to 5 MHz (SOLARTRON 1260 Impedance/Gain-Phase Analyzer from Toyo Corporation). Proton conductivity (S/cm) was calculated from the total resistance component (intragranular resistance + grain boundary resistance).

The proton conductivity was measured at the temperatures shown in Tables 1 to 4. The proton conductivity of Comparative Example 11 was recorded as "unmeasurable" because the durability of the proton conductor was low and it collapsed during evaluation.

### Measurement of Mechanical Loss Tangent (tan δ):

A rectangular test piece of 5 mm × 50 mm was cut out from the proton conductor, and tensile vibration measurement was performed using a dynamic viscoelasticity measuring device (DMS6100 manufactured by Seiko Instruments Inc.). Measurements were performed under a nitrogen gas flow (200 mL/min), at a frequency of 1 Hz, and at a temperature increase rate of 5°C/min from 35°C. The temperature corresponding to the peak (if observed) in the obtained tan δ graph was recorded. Note that for the proton conductors of Example 6 and Comparative Examples 6 and 7, no peak was observed in the measurements, and therefore they are listed as "unmeasurable" in Tables 1 and 2.

The results of these evaluations are shown in Tables 1 to 4. In these tables, "mass of dispersant" refers to the mass of the active ingredient of the dispersant, and does not include the mass of water as a solvent when the dispersant is used in the form of an aqueous solution. Further, "content by percentage of dispersant" in Tables 1, 3, and 4 refers to the percentage of the mass of the dispersant with respect to the total mass of the MOF, resin, and dispersant. Furthermore, in Tables 1 to 4, "film thickness" refers to the film thickness of the proton conductor.

In Tables 1 to 4, "-" means not measured.

**[Table 1]**

| | MOF | | Resin | | MOF/resin (mass ratio) | Dispersant | | | Solvent | | Film thickness (µm) | Proton conductivity (S·cm⁻¹) | Proton conductivity measurement temperature (°C) | tanδ |
|---|---|---|---|---|---|---|---|---|---|---|---|---|---|---|
| | Type | Mass (g) | Type | Mass (g) | | Type | Mass (g) | Content by percentage (mass%) | Type | Mass (g) | | | | |
| Example 1 | ZnPIm | 1.00 | PAI | 1.00 | 1.00 | MALIALIM FA-1150AM-08 | 0.10 | 4.8 | DMF | 4.25 | 60 | 1.02×10⁻⁴ | 170 | 276.3 |
| Example 2 | ZnPlm | 1.00 | PAI | 1.00 | 1.00 | MALIALIM FA-1150AM-08 | 0.10 | 4.8 | DMF | 4.25 | 40 | 1.32×10⁻⁴ | 170 | 276.1 |
| Example 3 | ZnPIm | 1.50 | PAT | 1.00 | 1.50 | MALIALIM FA-1150AM-08 | 0.10 | 2.6 | DMF | 5.19 | 59 | 2.44×10⁻⁴ | 170 | 267.2 |
| Example 4 | ZnPIm | 0.50 | PAI | 1.00 | 0.50 | MALIALIM FA-1150AM-08 | 0.10 | 6.2 | DMF | 3.78 | 47 | 012×10⁻⁴ | 170 | 273.8 |
| Example 5 | ZnPIm | 0.50 | PSU | 0.50 | 1.00 | MALIALIM FA-1150AM-08 | 0.10 | 1.0 | DMF | 2.55 | 45 | 0.42×10⁻⁴ | 170 | 190.8 |
| Example 6 | ZnP_dmBIm | 0.80 | PAI | 0.80 | 1.00 | MALIALIM FA-1150AM-08 | 0.10 | 4.8 | DMAc | 4.23 | 51 | 1.56×10⁻⁷ | 200 | Unmeasurable |
| Example 7 | ZnP_dmBIm | 0.79 | PAI | 0.79 | 0.70 | ESLEAM AD-3172M | 0.80 | 33.5 | DMAc | 3.01 | 106 | 8.53×10⁻⁷ | 200 | 272.9 |
| Example 8 | MIL(20)·1 | 0.50 | PAI | 0.50 | 1.00 | MALIALIM FA-1150AM-08 | 0.10 | 4.7 | NMP | 2.06 | 58 | 5.53×10⁻⁴ | 230 | 227.6 |
| Example 9 | MIL(10)·1 | 0.50 | PVB | 0.50 | 1.00 | MALIALIM FA-1 150AM-08 | 0.10 | 4.8 | NMP | 4.12 | 95 | 0.25×10⁻⁴ | 110 | |

**[Table 2]**

| | MOF | | Resin | | MOF/resin (mass ratio) | Dispersant | Solvent | | Film thickness (µm) | Proton conductivity (S·cm⁻¹) | Proton conductivity measurement temperature (°C) | tanδ |
|---|---|---|---|---|---|---|---|---|---|---|---|---|
| | Type | Mass (g) | Type | Mass (g) | | | Type | Mass (g) | | | | |
| Comparative Example 1 | ZnPIm | 1.00 | PAI | 1.00 | 1.00 | None | DMF | 4.25 | 60 | 0.63×10⁻⁴ | 170 | >282.0 |
| Comparative Example 2 | ZnPIm | 1.00 | PAI | 1.00 | 1.00 | None | DMF | 3.78 | 89 | 0.47×10⁻⁴ | 170 | >281.9 |
| Comparative Example 3 | ZnPIm | 1.40 | PAI | 1.00 | 1.40 | None | DMF | 3.96 | 60 | 0.78×10⁻⁴ | 170 | >279.9 |
| Comparative Example 4 | ZnPIm | 0.50 | PAI | 1.00 | 0.50 | None | DMF | 3.78 | 46 | 0.09×10⁻⁴ | 170 | >276.4 |
| Comparative Example 5 | ZnPIm | 0.50 | PSU | 0.50 | 1.00 | None | DMF | 2.36 | 67 | 0.37×10⁻⁴ | 170 | >194.1 |
| Comparative Example 6 | ZnP_dmBIm | 1.00 | PAI | 1.00 | 1.00 | None | DMAc | 4.23 | 48 | 1.07×10⁻⁷ | 200 | Unmeasurable |
| Comparative Example 7 | ZnP_dmBIm | 1.00 | PAI | 1.00 | 1.00 | None | DMAc | 3.29 | 60 | 1.31×10⁻⁷ | 200 | Unmeasurable |
| Comparative Example 8 | MIL(20)·1 | 0.50 | PAI | 0.50 | 1.00 | None | NMP | 2.06 | 65 | 2.73×10⁻⁴ | 230 | 232.3 |
| Comparative Example 9 | MIL(10)·1 | 0.50 | PVB | 0.50 | 1.00 | None | NMP | 4.12 | 70 | 0.07×10⁻⁴ | 110 | - |

**[Table 3]**

| | MOF | | Resin | | MOF/resin (mass ratio) | Dispersant | | | Solvent* | | Film thickness (µm) | Proton conductivity (S·cm⁻¹) | Proton conductivity measurement temperature (°C) | tanδ |
|---|---|---|---|---|---|---|---|---|---|---|---|---|---|---|
| | Type | Mass (g) | Type | Mass (g) | | Type | Mass (g) | Content by percentage (mass%) | Type | Mass (g) | | | | |
| Example 10 | ZnPIm | 0.33 | PVDF | 0.50 | 0.67 | MALIALIM FA-1150AM-08 | 6.7×10⁻² | 7.4 | NMP/acetone | 9.92 | 130 | 0.15×10⁻⁴ | 170 | - |
| Example 11 | ZnPIm | 0.33 | PVDF | 0.50 | 0.67 | Hinoact T-9100 | 6.6×10⁻² | 7.3 | NMP/acetone | 9.92 | 145 | 0.29×10⁻⁴ | 170 | - |
| Example 12 | ZnPIm | 0.33 | PVDF | 0.50 | 0.67 | AJISPER PN411 | 6.6×10⁻² | 7.3 | NM P/acetone | 9.92 | 110 | 0.80×10⁻⁵ | 170 | - |
| Example 13 | ZnPIm | 0.33 | PVDF | 0.50 | 0.67 | ESLEAM AD-3172M | 6.6×10⁻² | 7.3 | NMP/acetone | 9.92 | 120 | 0.14×10⁻⁴ | 170 | - |
| Example 14 | ZnPIm | 0.33 | PVDF | 0.50 | 0.67 | MALIALIM FA-1150AM-08 | 5.5×10⁻³ | 0.7 | NMP/acetone | 9.92 | 103 | 0.10×10⁻⁴ | 170 | - |
| Example 15 | ZnPIm | 0.33 | PVDF | 0.50 | 0.67 | MALIALIM FA-1150AM-08 | 3.3×10⁻² | 3.8 | NMP/acetone | 9.92 | 130 | 0.33×10⁻⁴ | 170 | - |
| Example 16 | ZnPIm | 0.33 | PVDF | 0.50 | 0.67 | MALIALIM FA-1150AM-08 | 5.0×10⁻² | 5.7 | NM P/acetone | 9.92 | 130 | 0.24×10⁻⁴ | 170 | - |
| Comparative Example 10 | ZnPIm | 0.33 | PVDF | 0.50 | 0.67 | None | 0 | 0 | NMP/acetone | 9.92 | 115 | 0.50× 10⁻⁵ | 170 | - |

| | | | | | | | | | | | | | | |
|---|---|---|---|---|---|---|---|---|---|---|---|---|---|---|
| *Solvent: Mixed solvent ofNMP/acetone (43:57, mass ratio) | | | | | | | | | | | | | | |

**[Table 4]**

| | MOF | | Resin | | MOF/resin (mass ratio) | Dispersant | | | Solvent | | Film thickness (µm) | Proton conductivity (S·cm⁻¹) | Proton conductivity measurement temperature (°C) | tanδ |
|---|---|---|---|---|---|---|---|---|---|---|---|---|---|---|
| | Type | Mass (g) | Type | Mass (g) | | Type | Mass (g) | Content by percentage (mass%) | Type | Mass (g) | | | | |
| Example 17 | DMAS_ZnoxRe | 0.50 | PSU | 0.50 | 1.00 | MALIALIM FA-1150AM-08 | 0.10 | 9.1 | Cyclopentanone | 2.30 | 80 | 0.92×10⁻⁶ | 170 | - |
| Example 18 | DMAS_ZnoxRe | 1.00 | PAI | 1.00 | 1.00 | MALIALIM FA-1150AM-08 | 0.20 | 9.1 | DMF | 5.50 | 72 | 0.30×10⁻⁵ | 170 | - |
| Example 19 | DMAS_ZnoxRe | 2.00 | PAI | 1.00 | 2.00 | MALIALIM FA-1150AM-08 | 0.30 | 9.1 | NMP | 5.00 | 55 | 0.43×10⁻⁷ | 170 | - |
| Example 20 | DMAS_ZnoxRe | 3.00 | 5030 | 1.00 | 3.00 | ESLEAM 221P | 0.30 | 7.0 | NMP | 5.00 | 170 | 0.11×10⁻⁵ | 170 | - |
| Example 21 | DMAS_ZnoxRe | 2.00 | L-20 | 1.00 | 2.00 | ESLEAM 221P+AJISPER PN411 | 0.30 | 9.1 | NMP | 7.00 | 40 | 0.87×10⁻⁶ | 170 | - |
| Example 22 | DMAS_ZnoxRe | 2.00 | L-20 | 1.00 | 2.00 | ESLEAM 221P | 0.20 | 6.3 | NMP | 6.00 | 77 | 0.21×10⁻⁶ | 170 | - |
| Example 23 | DMAS_ZnoxRe | 0.33 | PVDF | 0.50 | 0.67 | ESLEAM 221P | 0.10 | 10.7 | NM P/acetone | 10.0 | 48 | 0.13×10⁻⁵ | 170 | - |
| Comparative Example 11 | DMAS_ZnoxRe | 1.00 | PAI | 1.00 | 1.00 | None | 0 | 0 | DMF | 4.00 | 75 | Unmeasurable | - | - |

As can be seen from the comparison between Examples 1 to 9 in Table 1 and Comparative Examples 1 to 9 in Table 2, the proton conductors of each Example using a dispersant had higher proton conductivity at high temperatures of 110°C or higher than the proton conductors of each Comparative Example prepared under the same conditions except that no dispersant was used. From this, it can be seen that the dispersant has an effect of improving proton-conducting properties at high temperatures. Also, Table 3 shows that, even when the type and amount of the dispersant were variously changed (Examples 10 to 16), the proton conductivity at high temperatures is higher than when no dispersant was used (Comparative Example 10). Furthermore, Table 4 shows that all of the proton conductors of Examples 17 to 23 using DMAS_ZnoxRe as the MOF had satisfactory proton-conducting properties at high temperatures. The proton conductor of Comparative Example 11, which did not use a dispersant, had low durability, and proton conductivity could not be measured. That is, the proton conductor of Comparative Example 11 was a proton conductor with low practical use.

Further, when the mechanical loss tangent (tan δ) values are compared between the Examples and the Comparative Examples, it is found that the values of tan δ are smaller in the Examples using a dispersant. The value of tan δ is considered to represent the glass transition temperature (Tg), which means that the proton conductors of the Examples have higher flexibility. Such proton conductors are more practical because they are less likely to break when being incorporated into an electrochemical cell, for example.

### Industrial Applicability

According to the present invention, a proton conductor having high proton conductivity at high temperatures of 100°C or higher is provided.

## Claims

1. A proton conductor comprising:
a proton-conductive metal organic framework;
a resin; and
a dispersant, wherein:
the metal organic framework includes:
a metal ion and
a bridging ligand that coordinates to the metal ion; and
the metal organic framework contains a proton-conductive molecule or a proton-conductive ion.

2. The proton conductor according to claim 1, wherein the dispersant is a high-molecular-weight dispersant including a resin-affinity unit and a polar unit that has a polar group.

3. The proton conductor according to claim 1, wherein the dispersant includes a high-molecular-weight dispersant having a comb structure and/or a block polymer structure.

4. The proton conductor according to any one of claims 1 to 3, wherein a content of the dispersant is from 0.3 to 40 mass%.

5. The proton conductor according to any one of claims 1 to 3, wherein the resin is at least one selected from the group consisting of polyamide-imide, polysulfone, polyphenylsulfone, polyvinylidene fluoride, polyimide, polyvinyl butyral, and cellulose ester.

6. The proton conductor according to any one of claims 1 to 3, wherein the metal ion is at least one selected from the group consisting of zinc ions, chromium ions, aluminum ions, magnesium ions, manganese ions, iron ions, cobalt ions, nickel ions, copper ions, yttrium ions, and zirconium ions.

7. The proton conductor according to any one of claims 1 to 3, wherein the proton-conductive molecule or the proton-conductive ion is at least one selected from the group consisting of phosphate ion, hydrogen phosphate ion, dihydrogen phosphate ion, imidazole, imidazolium ion, benzimidazole, benzimidazolium ion, pyridine, pyridinium ion, trialkylamines, tetraalkylammonium salts, sulfate ion, hydrogen sulfate ion, and derivatives thereof.

8. The proton conductor according to any one of claims 1 to 3, wherein the bridging ligand is at least one selected from the group consisting of phosphoric acid, polycarboxylic acids, amino acids, polyamines, nitrogen-containing heteroaromatic compounds, anions thereof, and oxide ion.

9. The proton conductor according to any one of claims 1 to 3, wherein the metal organic framework and the dispersant are dispersed in a matrix comprising the resin.

10. An electrochemical cell comprising
an anode,
a cathode, and
a solid electrolyte film including the proton conductor according to any one of claims 1 to 3 and disposed between the anode and the cathode.

11. A method for producing a proton conductor, comprising:
casting a liquid mixture including a resin, a proton-conductive metal organic framework, a dispersant, and a solvent, to form a wet film; and
removing the solvent from the wet film, wherein:
the metal organic framework includes
a metal ion and
a bridging ligand that coordinates to the metal ion; and
the metal organic framework contains a proton-conductive molecule or a proton-conductive ion.
